# FASCICULE DE BREVET EUROPEEN

(11) **EP 0 522 919 B1**
(45) Date de publication et mention de la délivrance du brevet: **30.08.1995**
(21) Numéro de dépôt: 92401829.4
(22) Date de dépôt: 26.06.1992
(51) Int. Cl.: C10B 53/00, C10L 9/02

(54) **Procédé et installation de thermolyse de déchets industriels et/ou ménagers**
Verfahren und Einrichtung für die Thermolyse von Industrie- und/oder Haushaltsmüll
Process and installation for the thermolysis of industrial and/or domestic waste

(30) Priorité: 09.07.1991 FR 9108718
(43) Date de publication de la demande: 13.01.1993
(73) Titulaire: INSTITUT FRANCAIS DU PETROLE, 92502 Rueil-Malmaison (FR); THIDE ENVIRONNEMENT, F-91199 Corbeil-Essonnes (FR)
(72) Inventeur: Martin, Gérard, F-92500 Rueil Malmaison (FR); Gaulard, Robert, F-94370 Sussy en Brie (FR)

(56) Documents cités:
- EP-A- 0 426 925
- DE-A- 2 950 324
- DE-A- 3 509 275
- GB-A- 2 106 934

## Description

La présente invention concerne le domaine du traitement des déchets industriels et/ou ménagers et plus spécifiquement de la thermolyse ou pyrolyse de tels déchets.

La pyrolyse est une décomposition chimique d'un corps obtenue par chauffage à l'abri de l'oxygène, tandis que la thermolyse est une décomposition obtenue sous l'effet d'une variation de température. Ces deux termes définissent donc des opérations très proches, c'est pourquoi ils seront employés indifféremment dans la suite de ce texte.

Le traitement des déchets industriels et/ou urbains est important notamment pour l'environnement. Le traitement thermique le plus utilisé ces dernières années a été l'incinération des déchets mais les méthodes employées posent souvent problème soit au niveau du volume de produit solide à stocker soit au niveau de la qualité des rejets.

En ce qui concerne la qualité des produits rejetés, plusieurs installations de traitement de déchets ont déjà été proposées afin d'éliminer au maximum les polluants et notamment les métaux lourds, le chlore, le soufre... tant dans les effluents gazeux rejetés que dans les produits solides générés par l'incinération.

Une technique connue, enseignée par le document US-A-4303477 consiste à injecter en différents endroits d'un circuit de traitement des déchets, une poudre basique destinée à éliminer les métaux lourds, l'acide sulfureux ou des composés halogènés des gaz de combustion.

La demanderesse a proposé dans la demande de brevet français FR-2.668.774 (EP-A-0 485 255) un procédé et une installation de traitement de déchets combustibles selon lequel les déchets subissent une pyrolyse. Afin de produire, en sortie de cette installation, des combustibles aussi propres et valorisables que possible, les effluents issus de l'opération de pyrolyse sont traités à chaud et à sec (c'est-à-dire sans lavage).

On connait par ailleurs par la demande de brevet français FR-2.654.112 (EP-A-0 426 925) un procédé et une installation de traitement de déchets urbains mettant en oeuvre une opération de thermolyse réalisée après un séchage particulier des déchets. De plus, les goudrons présents initialement dans les gaz de thermolyse sont extraits des gaz de thermolyse afin de pouvoir réutiliser ces gaz ultérieurement dans le procédé.

Il existe encore d'autres techniques qui préconisent d'autres types de traitement des effluents et/ou des particules issues de la pyrolyse (ou thermolyse) des déchets mais d'une manière générale ces post-traitements sont soit compliqués donc onéreux, soit peu efficaces.

La présente invention vise un procédé et une installation de traitement de déchets urbains et/ou industriels du type défini en tête de la description et dont les améliorations consistent à :
. traiter des déchets industriels et ménagers très hétérogènes et renfermant des quantités importantes d'éléments comme les métaux lourds ou certaines hétéroatomes tels le chlore, le fluor, le soufre etc..., sans rejet de matières nocives et polluantes à l'extérieur;
. valoriser l'essentiel de l'énergie contenue dans les déchets sous la forme d'un coke débarrassé de la plus grande partie de ses polluants, facilement stockable et utilisable ultérieurement dans des installations classiques brûlant des combustibles solides;
. utiliser au mieux le potentiel de captation des matières minérales basiques contenues dans les déchets. La plage de température à laquelle on effectue la thermolyse des déchets permet en effet une captation aisée des hétéroatomes polluants par les composés alcalins et alcalino-terreux accompagnant les déchets;
. rejeter à l'atmosphère des gaz de combustion utilisés pour le procédé, exempts de substances polluantes;
. traiter les effluents de séchage pour éliminer tous les produits malodorants et les essences légères;
. obtenir un combustible dont le pouvoir calorifique est nettement supérieur à celui des déchets traités;
. rejeter à l'extérieur, des eaux propres faiblement chargés en chlorures.

Ces objets peuvent être obtenus par un procédé de traitement de déchets comprenant notamment une étape de séchage des déchets suivie d'une étape de thermolyse, les solides et les gaz issus de la thermolyse étant récupérés et/ou traités.

Le séchage des déchets est réalisé par contact direct des déchets avec des gaz chauds. Les gaz de séchage sont traités puis partiellement recyclés dans l'installation. Au cours de la thermolyse, les déchets ne sont pas en contact avec les fumées résultant de la combustion d'une partie des gaz générés par la thermolyse.

L'invention est mise en oeuvre dans les conditions énumérées ci-dessus. De façon caractéristique, on réalise une déchloruration par lavage des solides sortant de la thermolyse, puis on effectue une première étape de séparation entre les solides ainsi lavés et le liquide de lavage.

Les solides ainsi traités peuvent ensuite être stockés ou être utilisés dans un générateur thermique adjacent à l'unité de thermolyse.

Le procédé selon l'invention peut comporter en outre une deuxième étape de séparation entre les particules contenues dans le liquide de lavage issu de la première étape de séparation, le liquide de lavage issu de la deuxième séparation étant en partie réutilisé pour ladite déchloruration.

De façon préférentielle, la première étape de séparation consiste en outre à extraire les composés inertes non combustibles contenus dans les solides générés dans l'étape de thermolyse.

Avantageusement, les gaz chauds utilisés pour le séchage des déchets sont issus d'un générateur dans lequel sont injectés les gaz de combustion/chauffage utilisées pour la thermolyse, les gaz de séchage traités et les composés organiques légers issus de l'étape de déchloruration. Le brûleur dudit générateur est notamment alimenté en air et par une autre partie des gaz générés par la thermolyse.

En outre, une partie seulement des fumées chaudes issues du générateur est utilisée pour le séchage des déchets, l'autre partie étant réutilisée pour une autre fonction dans l'installation, par exemple pour le préchauffage de l'air de combustion du générateur lui-même.

L'invention vise également une installation de traitement de déchets industriels selon le préambule de la revendication 12.

De façon caractéristique, l'installation comprend en outre un moyen destiné à recueillir et à laver des produits issus du moyen de thermolyse, le moyen de thermolyse comprend deux enceintes différentes permettant de séparer les gaz de chauffage vis à vis des déchets, et le moyen de thermolyse est alimenté par une partie des effluents issus de la thermolyse.

De plus l'installation comprend au moins un premier séparateur placé en aval dudit moyen de lavage, les particules solides séparées dans ledit séparateur étant ensuite recueillies dans un moyen de stockage, et le liquide de lavage épuré étant réinjecté dans le circuit d'alimentation dudit moyen de lavage.

Sans sortir du cadre de l'invention ledit premier séparateur peut comporter en outre un moyen destiné à séparer les solides combustibles des inertes non combustibles.

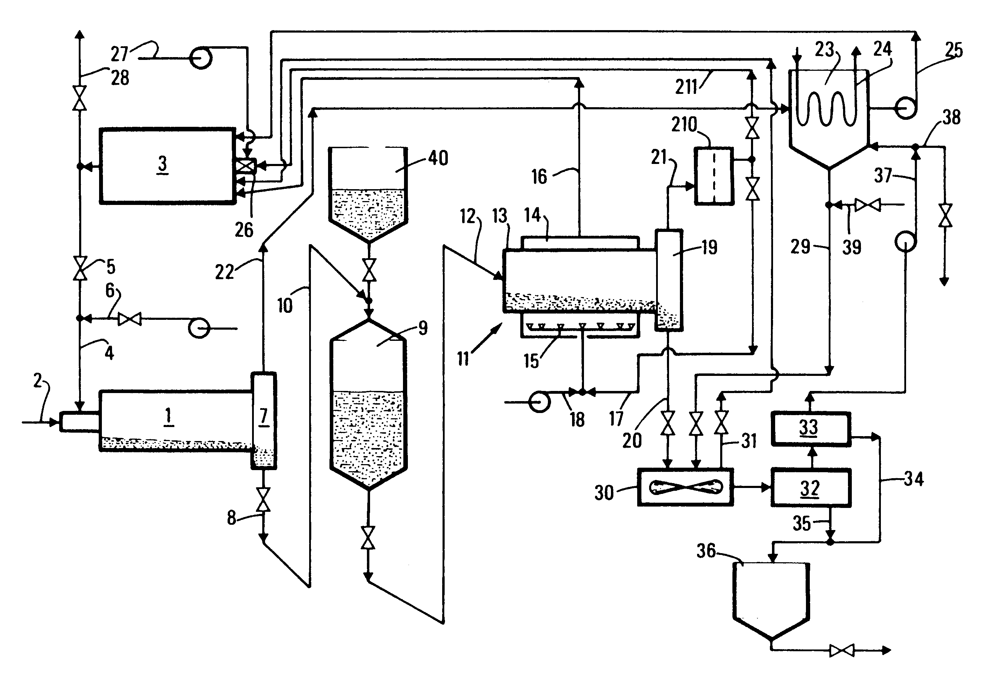

D'autres caractéristiques et avantages de la présente invention seront mieux compris à la lecture de la description suivante, faite à titre indicatif et nullement limitatif en référence à l'unique figure annexée.

Les déchets humides sont amenés par la ligne 2 vers un sécheur 1 tel que par exemple un tambour rotatif d'axe substantiellement horizontal.

Les déchets sont mis en contact, à l'intérieur du sécheur 1 avec des fumées chaudes amenées par une ligne 4 et provenant d'un générateur de chaleur 3.

Le débit des fumées chaudes peut par exemple être régulé par une vanne ou un volet d'obturation 5. D'autre part une admission d'air froid 6, elle-aussi modulable, peut être prévue sur la ligne 4 d'amenée des fumées chaudes.

Les déchets sont brassés, mélangés à l'air chaud à l'intérieur du tambour-sécheur 1 et ils progressent dans le même sens que l'air chaud vers une zone d'extraction 7 située bien entendu à l'extrémité opposée à l'admission.

Les déchets séchés, déshydratés sont amenés du sécheur 1 vers une trémie intermédiaire 9 par une ligne 8. Un élévateur 10 peut être prévu sur la ligne 8, pour des problèmes d'encombrement général de l'installation.

De même la trémie de stockage intermédiaire 9 n'est pas toujours nécessaire. Si un agent basique doit être ajouté aux déchets, une trémie spécifique 40 peut alors être prévue à ce niveau afin d'injecter le composé basique aux déchets secs, avant leur thermolyse.

L'ajout d'un agent basique est envisageable dans le cas où le potentiel basique des matières minérales apportées par les déchets n'est pas suffisant pour capter tous les éléments polluants présents dans les déchets.

Après cette éventuelle injection, les déchets séchés sont introduits par une ligne 12 dans le réacteur de pyrolyse 11. De façon préférentielle, le réacteur est constitué d'une enveloppe cylindrique intérieure 13 parfaitement étanche, dans laquelle progressent longitudinalement les déchets. Cette enveloppe 13 tourne autour de son axe longitudinal qui est légèrement incliné de façon à faciliter par gravitation l'acheminement des solides vers un séparateur 19. Une enveloppe externe 14 entoure l'enveloppe interne 13, ménageant ainsi un espace substantiellement annulaire destiné aux gaz de chauffage de l'enveloppe 13. Un ou plusieurs brûleurs 15 localisés par exemple dans l'espace annulaire, au-dessous de l'enveloppe 13, assurent la montée et le maintien en température des déchets présents à l'intérieur de l'enveloppe 13.

Les gaz de combustion produits par les brûleurs 15 sont évacués par une ligne 16 et dirigés par exemple vers le générateur de chaleur 3.

Le combustible utilisé par les brûleurs 15 est constitué d'une fraction des gaz produits dans le réacteur de thermolyse 11, et amenés par une ligne spécifique 17 à partir de la partie supérieure du séparateur-extracteur 19 situé en sortie du réacteur de thermolyse 11. L'air de combustion est amené par une autre ligne 18.

Dans l'extracteur 19, les solides sortant de l'enveloppe 13, en sont extraits gravitairement par une ligne 20, à une température proche de la température finale de thermolyse qui se situe entre 200 et 700°C, de préférence entre 350 et 500°C.

De façon préférentielle, afin de pièger les composés résiduels acides présents dans les effluents de thermolyse, tels que le chlore, le fluor,... un dispositif 210 de piègeage à sec de ces composés peut être prévu sur la conduite 21 ce sortie des effluents, près de l'extracteur 19. Ce dispositif 210 peut être maintenu en température par des résistances électriques (non représentées), afin d'éviter une baisse de température des gaz de thermolyse.

En aval du dispositif 210 une fraction des effluents de thermolyse est envoyée vers les brûleurs 15. L'autre partie des gaz issus de la thermolyse est réservée à la génération de gaz chauds pour le séchage des déchets. Ces gaz de thermolyse sont donc envoyés par une conduite 211 dans le générateur de fumées chaudes 3. Plus précisément ces effluents de thermolyse alimentent ou les brûleurs 26 du générateur 3, l'air de combustion arrivant par exemple par une autre conduite 27.

Dans le générateur de chaleur 3 peuvent en outre être introduits des gaz chauds issus du sécheur 1. Préférentiellement, les gaz de séchage sortent du sécheur 1 par une ligne spécifique 22 et traversent un condenseur 23 équipé d'un circuit de réfrigération 24. On réalise ainsi une condensation de la vapeur d'eau, les essences légères restant dans la phase gazeuse. En sortie du condenseur 23 une ligne 25 permet de diriger les gaz de séchage secs et les essences légères vers le générateur 3. Ces effluents, ainsi que les fumées générées par les brûleurs, sont donc introduites dans le générateur 3 où elles s'ajoutent aux fumées chaudes produites par le brûleur 26. Cette incinération permet de supprimer toute matière organique imbrûlée.

En sortie du générateur 3, la température des gaz chauds est au moins égale à 850°C, le temps de séjour dans le générateur 3 étant au moins de 2 secondes.

Il est possible que dans certaines conditions de fonctionnement, tous les gaz chauds produits par le générateur 3 ne soient pas injectés dans le sécheur 1. Dans ce cas, l'autre partie des fumées chaudes est évacuée séparément par une ligne 28 et peut être utilisée dans d'autres zones de l'installation. En particulier, ces fumées peuvent être utilisées pour le préchauffage de l'air de combustion du générateur 3.

De façon caractéristique selon l'invention, les solides issus du réacteur de thermolyse 11 et évacués par la ligne 20 sont mis en contact avec un agent de lavage tel que de l'eau par exemple, dans un bac 30 dit de "lavage".

L'eau et/ou tout autre agent de lavage est préférentiellement amené par une conduite 29 issue du condenseur 23. Le bac 30 peut en outre être équipé de moyens de brassage (non référencés), afin d'améliorer la mise en contact de l'eau et des sol ides de thermolyse.

Ce lavage des solides de thermolyse a pour objet d'éliminer les chlorures renfermés à l'intérieur. La température de l'eau dans le bac 30, c'est-à-dire après mise en contact avec les solides se situe entre 20 et 100°C de préférence entre 50 et 90°C. En outre, le bac de lavage 30 peut être compartimenté, de façon à réaliser un lavage plus efficace. Par exemple, l'eau de lavage et les solides à traiter peuvent circuler à contre-courant dans les compartiments, de façon à accroître le rendement de déchloruration et à diminuer la quantité d'eau de lavage. L'échauffement de l'eau de lavage s'effectue de préférence automatiquement, grâce à la chaleur sensible apporté par les solides chauds.

Il se produit dans le bac 30 une vaporisation de composés organiques légers dissous dans l'eau lors de l'étape de condensation. Ces composés sont évacués par une conduite 31 qui les dirige vers le générateur 3, afin de les y brûler.

Le mélange solides déchlorurés-eau est transféré du bac 30 vers un premier séparateur 32 entre phases solide et liquide, d'où les particules dépolluées sont évacuées par une ligne 35 avant d'être stockées dans un dispositif (trémie) spécifique 36.

Une autre séparation peut avantageusement être réalisée dans le premier séparateur 32. Il s'agit de différencier les composés inertes non combustibles (tels que verre, métaux...) du coke, par différence de densité. Sans sortir du cadre de l'invention la séparation des inertes peut être réalisée par flottation pendant le lavage.

En outre, le liquide de lavage sortant du premier séparateur 32 peut être débarrassé de ses plus fines particules dans un deuxième séparateur 33. Les fines particules solides récupérées à cet endroit sont évacuées par une ligne 34 et rejoignent la ligne 35 d'évacuation des solides.

Le liquide de lavage, chargé en chlorures, est évacué du deuxième séparateur 33 par une ligne 37 et est de préférence dirigé vers le condenseur 23. Une évacuation d'eau par une ligne 38 peut être prévue à partir de la ligne 37, selon le taux de chlorures présent dans l'eau de lavage.

A contrario, lorsque la dissolution des chlorures contenus dans les solides issus de la thermolyse le nécessite, un apport d'eau complémentaire peut être réalisé, par exemple au niveau de la ligne 29 d'amenée d'eau au bac de lavage 30. Une ligne spécifique 39 débouche alors dans la ligne 29.

Bien entendu, des vannes, volets ou tout autres dispositifs connus en soi peuvent être ménagés sur les différentes conduites de l'installation conforme à l'invention, afin de réguler les différents débits c'est-à-dire d'adapter l'installation au volume et/ou à la composition des déchets à traiter.

Certains de ces organes de régulation sont représentés sur la figure annexée. L'homme de métier sera en mesure d'en ajouter ou d'en éliminer sans sortir du cadre de l'invention. De même, des dispositifs de mesure tels que capteurs de pression, de température, de débit (non représentés) peuvent être prévus en différents endroits de l'installation à des fins de contrôle.

A partir de l'installation qui vient d'être décrite, et du procédé associé, un traitement amélioré de déchets fortement contaminés par des polluants, peut donc être réalisé.

Ainsi des déchets renfermant notamment des métaux lourds, du chlore, du fluor, du soufre en forte proportion peuvent être traités dans l'installation sans conduire à des émissions préjudiciables à l'environnement.

Les effluents gazeux produits par l'installation (par la ligne 28 par exemple) ne renferment plus de composés acides tels que de l'acide chlorhydrique, de l'acide fluorhydrique ou des oxydes de soufre etc...., ni de composé organique imbrûlé ou toxique, l'ensemble de ces polluants ayant été éliminé par incinération et/ou par lavage et/ou par réaction chimique.

Les eaux utilisées pour le lavage des solides issus de la thermolyse ne contiennent que des chlorures et ne renferment pas de matière organique. Ces eaux permettent donc une déchloruration très efficace des solides, de sorte que le coke ainsi généré ne produira pas d'acide chlorhydrique lors d'une combustion ultérieure.

De plus, le coke a un pouvoir calorifique amélioré du fait de l'élimination de presque tous les solides inertes non combustible au niveau du premier séparateur 32.

Le coke produit renferme l'essentiel des métaux lourds qui pourront être éliminés de manière controlée lors d'une combustion ultérieure.

Bien entendu, l'homme de l'art sera en mesure d'imaginer à partir de l'installation et du procédé qui viennent d'être décrits à titre illustratif et nullement limitatif, diverses variantes et/ou modifications ne sortant pas du cadre de l'invention telle que définie dans les revendications.

## Revendications

1. Procédé de traitement de déchets industriels et/ou ménagers comprenant notamment une étape de séchage des déchets suivie d'une étape de thermolyse, les solides et les gaz issus de la thermolyse étant récupérés et/ou traités, les gaz de séchage étant traités puis recyclés dans l'installation et les déchets n'étant pas en contact avec les gaz de combustion au cours de l'étape de thermolyse, caractérisé en ce qu'il comprend en outre une étape de déchloruration par lavage des solides sortant de la thermolyse, suivie d'une première étape de séparation entre les solides ainsi lavés et le liquide de lavage.

2. Procédé de traitement selon la revendication 1 caractérisé en ce qu'il comporte en outre une deuxième étape de séparation entre les particules contenues dans le liquide de lavage issu de la première étape de séparation, et en ce que le liquide de lavage issu de la deuxième séparation est en partie réutilisé pour ladite déchloruration.

3. Procédé selon la revendication 2 caractérisé en ce que la première étape de séparation consiste en outre à extraire les composés inertes non combustibles contenus dans les solides générés par la thermolyse.

4. Procédé selon l'une quelconque des revendications précédentes caractérisé en ce que les gaz chauds utilisés pour le séchage des déchets sont produits dans un générateur (3) dans lequel sont injectés les gaz de combustion utilisés pour la thermolyse, les gaz de séchage traités et les composés organiques légers issus de l'étape de déchloruration, le brûleur dudit générateur étant notamment alimenté par une autre partie des gaz générés par la thermolyse.

5. Procédé selon la revendication 4, caractérisé en ce qu'une partie seulement des fumées chaudes issues du générateur (3) est utilisée pour le séchage des déchets, l'autre partie étant utilisée pour le préchauffage de l'air de combustion dudit générateur.

6. Procédé selon l'une quelconque des revendications précédentes caractérisé en ce que le séchage a lieu à co-courant, de sorte que les fumées chaudes et les déchets circulent dans le même sens dans le sécheur(1).

7. Procédé selon l'une quelconque des revendications 4 à 6 caractérisé en ce que le traitement des gaz de séchage consiste essentiellement en une condensation de la vapeur d'eau avec séparation des essences légères, avant la réinjection desdites essences légères dans le générateur de gaz chauds (3).

8. Procédé selon l'une quelconque des revendications précédentes caractérisé en ce que les gaz générés par la thermolyse passent dans un dispositif (210) de piègeage de composés résiduels acides avant d'être utilisés dans le générateur de gaz chauds.

9. Procédé selon l'une quelconque des revendications précédentes caractérisé en ce qu'un agent basique peut être mélangé aux déchets séchés, avant leur thermolyse.

10. Procédé selon l'une quelconque des revendications précédentes caractérisé en ce que la thermolyse est réalisée entre 200° et 700°C, de préférence entre 350° et 500°C.

11. Procédé selon l'une quelconque des revendications précédentes caractérisé en ce que la température en sortie dudit générateur (3) de gaz chauds est au moins égale à 850°C, et en ce que le temps de séjour dans ledit générateur est moins de 2 secondes.

12. Installation de traitement de déchets industriels et/ou ménagers comprenant notamment :
- un moyen de séchage des déchets (1),
- un moyen de thermolyse des déchets (11),
- un moyen de traitement des gaz issus de la thermolyse,
- un moyen (3) de génération de fumées chaudes destinées au moins en partie au moyen de séchage (1),
- un moyen de recyclage des gaz de séchage,
caractérisé en ce qu'elle comprend en outre un moyen (30) destiné à recueillir et à laver de préférence à l'eau les produits solides sortant du moyen de thermolyse, en ce que le moyen de thermolyse (11) comprend deux enceintes différentes (13, 14) séparant les gaz de chauffage vis-à-vis des déchets, en ce que le moyen de thermolyse est alimenté par une partie des effluents issus de la thermolyse, et en ce qu'elle comprend en outre au moins un premier séparateur (32) placé en aval dudit moyen de lavage (30), les particules solides séparées dans ledit séparateur (32) étant ensuite recueillies dans un moyen de stockage (36), et le liquide de lavage épuré étant réinjecté dans le circuit d'alimentation dudit moyen de lavage (30).

13. Installation selon la revendication 12 caractérisé en ce que ledit premier séparateur (32) comporte en outre un moyen destiné à séparer les solides combustibles des inertes non combustibles.

14. Installation selon l'une quelconque des revendications 12 ou 13 caractérisé en ce qu'elle comporte en outre un deuxième séparateur (33) placé en aval dudit premier séparateur (32) et destiné à séparer les fines particules contenues dans le liquide de lavage, ledit deuxième séparateur comportant une sortie pour les fines particules.

15. Installation selon l'une quelconque des revendications 12 à 14, caractérisé en ce qu'elle comporte en outre un dispositif (210) de piègeage des acides présents dans les gaz produits par la thermolyse, ledit dispositif étant situé en sortie du moyen de thermolyse (11).

16. Installation selon quelconque des revendication 12 à 15 caractérisé en ce que ledit générateur de fumées chaudes (3) comporte au moins une entrée pour les gaz de combustion issus du moyen de thermolyse, une entrée pour les gaz purifiés issus du moyen de séchage (1) et une entrée pour des composés organiques provenant dudit moyen de lavage (30) et en ce que le brûleur (26) dudit générateur (3) est alimenté notamment par des gaz issus de la thermolyse.

17. Installation selon l'une quelconque des revendications 12 à 16 caractérisé en ce qu'elle comporte en outre un moyen (9, 40) destiné à injecter un agent basique placé en aval du moyen (1) de séchage et en amont du moyen (11) de thermolyse, relativement au sens d'écoulement des déchets.

## Claims

1. A method of treating industrial and/or household waste comprising in particular a step for drying the waste followed by a thermolysis step, the solids and the gas resulting from the thermolysis process being recovered and/or treated, the drying gases being treated then recycled in the plant and the waste not coming into contact with the combustion gases during the thermolysis step, characterised in that it also comprises a step of dechlorination by washing the solids from the thermolysis process, followed by a step of separating the solids so washed from the washing liquid.

2. A treatment method as claimed in claim 1, characterised in that it further comprises a second step for separating out the particles contained in the washing liquid resulting from the first separation step and in that the washing liquid from the second separation is partially re-used for this dechlorination.

3. A method as claimed in claim 2, characterised in that the first separation step also consists in extracting the inert, non-combustible compounds contained in the solids generated by the thermolysis process.

4. A method as claimed in any one of the previous claims, characterised in that the hot gases used for drying the waste are produced in a generator (3) into which the combustion gases used for the thermolysis process, the treated drying gases and the light organic compounds from the dechlorination step are injected, the burner of this generator being supplied in particular by another part of the gases generated by the thermolysis process.

5. A method as claimed in claim 4, characterised in that only a proportion of the hot fumes given off from the generator (3) is used for drying the waste, the other part being used to pre-heat the combustion air of the generator.

6. A method as claimed in any one of the previous claims, characterised in that the drying takes place in parallel-flow so that the hot fumes and waste circulate in the same direction in the drier (1).

7. A method as claimed in any one of claims 4 to 6, characterised in that the treatment of the drying gases essentially consists in condensing the water vapour and separating the light gasolines before re-injecting these light gasolines into the hot gas generator (3).

8. A method as claimed in any one of the previous claims, characterised in that the gases generated by the thermolysis process pass into a device (210) for trapping the residual acid compounds before they are used in the hot gas generator.

9. A method as claimed in any one of the previous claims, characterised in that a base agent may be mixed with the dried waste before it undergoes the thermolysis process.

10. A method as claimed in any one of the previous claims, characterised in that thermolysis is carried out at between 200° and 700°C, preferably between 350° and 500°C.

11. A method as claimed in any one of the previous claims, characterised in that the temperature at the output of the hot gas generator (3) is at least equal to 850°C and in that the residence time in the generator is at least 2 seconds.

12. Plant for processing industrial and/or household waste comprising in particular:
- a means for drying the waste (1),
- a thermolysis means for the waste (11),
- a means for treating the gases resulting from the thermolysis process,
- a means (3) for generating hot fumes, at least a proportion of which is fed to the drying means (1),
- a means for recycling the drying gases,
characterised in that it also comprises a means (30) for collecting and washing preferably with water the solid products discharged from the thermolysis means and in that the thermolysis means (11) has two different chambers (13, 14) keeping the heating gases separate from the waste, in that the thermolysis means is supplied by a part of the effluents from the thermolysis process, and in that it also comprises at least one separator (32) located downstream of this washing means (30), the solid particles separated out in this separator (32) being then collected in a storage means (36) and the purified washing liquid being re-injected into the supply circuit of the washing means (30).

13. Plant as claimed in claim 12, characterised in that this first separator (32) also has a means for separating the combustible solids from the inert, non-combustible solids.

14. Plant as claimed in either of claims 12 or 13, characterised in that it also comprises a second separator (33) located downstream of this first separator (32) and designed to separate out the fine particles contained in the washing liquid, this second separator having an outlet for the fine particles.

15. Plant as claimed in any one of claims 12 to 14, characterised in that it also has a device (210) for trapping the acids present in the gases produced by the thermolysis process, this device being located at the output of the thermolysis means (11).

16. Plant as claimed in any one of claims 12 to 15, characterised in that this hot fume generator (3) has at least one inlet for the combustion gases from the thermolysis means, one inlet for the purified gases from the drying means (1) and one inlet for the organic compounds from this washing means (30) and in that the burner (26) of this generator (3) is supplied in particular by the gases resulting from the thermolysis process.

17. Plant as claimed in any one of claims 12 to 16, characterised in that it also has a means (9, 40) for injecting a base agent located downstream of the drying means (1) and upstream of the thermolysis means (11) relative o the direction of flow of the waste.

## Patentansprüche

1. Verfahren zum Behandeln von Industrie- und/oder Haushaltsmüll, insbesondere eine Stufe der Trocknung der Abfälle, gefolgt von einer Thermolysestufe umfassend, wobei die Feststoffe und die aus der Thermolyse stammenden Gase gewonnen und/oder behandelt werden, die Trocknungsgase behandelt, dann in die Einrichtung recycliert werden und die Abfälle nicht in Kontakt mit den Verbrennungsgasen während der Thermolysestufe stehen, dadurch gekennzeichnet, daß es im übrigen eine Stufe der Entchlorung durch Waschen der aus der Thermolyse austretenden Feststoffe, gefolgt von einer ersten Stufe der Trennung zwischen den so gewaschenen Feststoffen und der Waschflüssigkeit umfaßt.

2. Behandlungsverfahren nach Anspruch 1, dadurch gekennzeichnet, daß es im übrigen eine zweite Stufe der Trennung zwischen den in der aus der ersten Trennstufe stammenden Waschflüssigkeit enthaltenden Partikeln umfaßt und daß die aus der zweiten Trennstufe stammende Waschflüssigkeit zum Teil für diese Entchlorung wiederverwendet wird.

3. Verfahren nach Anspruch 2, dadurch gekennzeichnet, daß die erste Trennstufe im übrigen darin besteht, die inerten nicht brennbaren in den durch die Thermolyse erzeugten Feststoffen enthaltenen Zusammensetzungen zu extrahieren.

4. Verfahren nach einem der vorhergehenden Ansprüche, dadurch gekennzeichnet, daß die für die Trocknung der Abfälle verwendeten heißen Gase in einem Generator (3) erzeugt werden, in den die für die Thermolyse verwendeten Verbrennungsgase, die behandelten Trocknungsgase und die organischen aus der Entchlorungsstufe stammenden leichten Verbindungen injiziert werden, wobei der Brenner dieses Generators insbesondere durch einen anderen Teil der durch die Thermolyse erzeugten Gase gespeist wird.

5. Verfahren nach Anspruch 4, dadurch gekennzeichnet, daß nur ein Teil der heißen aus dem Generator (3) stammenden Rauchgase für die Trocknung der Abfälle verwendet wird, wobei der andere Teil für das Vorwärmen der Verbrennungsluft dieses Generators verwendet wird.

6. Verfahren nach einem beliebigen der vorhergehenden Ansprüche, dadurch gekennzeichnet, daß die Trocknung im Gleichstrom derart durchgeführt wird, daß die heißen Rauchgase und die Abfälle in der gleichen Richtung im Trockner (1) zirkulieren.

7. Verfahren nach einem beliebigen der Ansprüche 4 bis 6, dadurch gekennzeichnet, daß die Behandlung der Trocknungsgase im wesentlichen in einer Kondensation des Wasserdampfs unter Trennung der leichten Benzine vor der Reinjektion dieser Leichtbenzine in den Heißgasgenerator (3) besteht.

8. Verfahren nach einem beliebigen der vorhergehenden Ansprüche, dadurch gekennzeichnet, daß die durch Thermolyse erzeugten Gase in einer Vorrichtung (210) zum Einfangen der sauren Restverbindungen durchströmen, bevor sie in dem Heißgasgenerator verwendet werden.

9. Verfahren nach einem beliebigen der vorhergehenden Ansprüche, dadurch gekennzeichnet, daß ein basisches Mittel in getrockneten Abfällen vor deren Thermolyse zugemischt werden kann.

10. Verfahren nach einem beliebigen der vorhergehenden Ansprüche, dadurch gekennzeichnet, daß die Thermolyse zwischen 200 und 700°C, bevorzugt zwischen 350 und 500°C, durchgeführt wird.

11. Verfahren nach einem der vorhergehenden Ansprüche, dadurch gekennzeichnet, daß die Temperatur am Austritt dieses Generators (3) für die heißen Gase wenigstens gleich 850°C ist und daß die Verweilzeit in diesem Generator wenigstens 2 Sekunden beträgt.

12. Vorrichtung bzw. Installation zur Behandlung von Industrie- und/oder Haushaltsmüll, insbesondere umfassend:
- ein Mittel zum Trocknen der Abfälle (1),
- ein Thermolysemittel für die Abfälle (11),
- ein Mittel zum Behandeln der aus der Thermolyse stammenden Gase,
- ein Mittel (3) zur Erzeugung heißer Rauchgase, die wenigstens zum Teil für das Trocknungsmittel (1) bestimmt sind,
- und ein Mittel zum Recyclieren der Trocknungsgase,
dadurch gekennzeichnet, daß sie im übrigen ein Mittel (30) umfaßt, das dazu bestimmt ist, bevorzugt mit Waschwasser die festen Produkte, die aus dem Thermolysemittel austreten, zu waschen, daß das Thermolysemittel (11) zwei unterschiedliche Kammern (13, 14) umfaßt, welche die Heizgase bezüglich der Abfälle trennen, daß das Thermolysemittel durch einen Teil der aus der Thermolyse stammenden Abströme gespeist wird und daß sie im übrigen wenigstens einen ersten Separator (32) umfaßt, der in Strömungsrichtung hinter dem Waschmittel (30) angeordnet ist, wobei die in diesem Separator (32) getrennten Feststoffpartikel dann in einem Speichermittel (36) gesammelt werden und die gereinigte Waschflüssigkeit in den Speisekreis dieses Waschmittels (30) reinjiziert wird.

13. Vorrichtung bzw. Installation nach Anspruch 12, dadurch gekennzeichnet, daß dieser erste Separator (32) im übrigen ein Mittel umfaßt, das dazu bestimmt ist, die brennbaren Feststoffe von den nicht brennbaren Inertstoffen zu trennen.

14. Vorrichtung bzw. Installation nach einem beliebigen der Ansprüche 12 oder 13, dadurch gekennzeichnet, daß sie im übrigen einen zweiten Separator (33) umfaßt, der in Strömungsrichtung hinter dem ersten Separator (32) angeordnet und dazu bestimmt ist, die in der Waschflüssigkeit enthaltenen feinen Partikel zu trennen, wobei dieser zweite Separator einen Austritt für die feinen Partikel umfaßt.

15. Vorrichtung bzw. Installation nach einem der Ansprüche 12 bis 14, dadurch gekennzeichnet, daß sie im übrigen eine Vorrichtung (210) zum Einfangen der in den durch die Thermolyse erzeugten Gasen enthaltenen Säure umfaßt, wobei diese Vorrichtung am Austritt aus dem Thermolysemittel (11) angeordnet ist.

16. Vorrichtung bzw. Installation nach einem der Ansprüche 12 bis 15, dadurch gekennzeichnet, daß dieser Generator für heiße Rauchgase (3) wenigstens einen Eingang für die aus dem Thermolysemittel stammenden Verbrennungsgase, einen Eingang für die gereinigten aus dem Trocknungsmittel (1) stammenden Gase und einen Eingang für organische Zusammensetzungen, die aus dem Waschmittel (30) stammen, hat und daß der Brenner (26) dieses Generators (3) insbesondere durch aus der Thermolyse stammende Gase gespeist wird.

17. Vorrichtung bzw. Installation nach einem beliebigen der Ansprüche 12 bis 16, dadurch gekennzeichnet, daß sie im übrigen ein Mittel (9, 40) umfaßt, das dazu bestimmt ist, ein basisches Mittel in Strömungsrichtung hinter dem Trocknungsmittel (1) und vor dem Thermolysemittel (11), relativ zur Strömungsrichtung der Abfälle, zu injizieren.
